# EUROPEAN PATENT SPECIFICATION

(11) **EP 0 724 178 B1**
(45) Date of publication and mention of the grant of the patent: **22.09.1999**
(21) Application number: 95902998.4
(22) Date of filing: 20.12.1994
(51) Int. Cl.: G02C 1/02, G02C 5/22

(54) **THREE-POINT SUPPORT LENS CLIP TYPE RIMLESS SPECTACLES**
RANDLOSE BRILLE MIT DREIPUNKTHALTERUNG FÜR DIE GLÄSER
LUNETTES SANS CADRE AVEC TROIS POINTS DE FIXATION POUR LES VERRES

(30) Priority: 12.08.1994 JP 1000694 U
(43) Date of publication of application: 31.07.1996
(73) Proprietor: MASUNAGA OPTICAL MFG. Co., LTD., Fukui-shi, Fukui 910-37 (JP)
(72) Inventor: MASUNAGA, Satoru, Fukui 910-37 (JP)
(74) Representative: Pearce, Anthony Richmond
(86) International application number: PCT/JP94/02148
(87) International publication number: WO 96/05535

(56) References cited:
- WO-A-92/08158
- FR-A- 402 468
- GB-A- 2 274 728
- JP-U- 2 064 916
- US-A- 943 085
- US-A- 5 073 020

## Description

### FIELD OF THE INVENTION

The present invention relates to the improvement in a pair of rimless spectacles, more specifically, a pair of rimless spectacles with its lenses supported and clipped at three positions which is not only surprisingly easy and fast to assemble but also very stable in holding the lenses thereof, and especially it is very beneficial to the optical shop and the eyeglasses discount shop owners who must actually process and assemble the lenses by themselves according to demand from an individual purchaser of spectacles.

### BACKGROUND OF THE INVENTION

The taste of recent eyeglasses wearers is focused on a pair of rimless spectacles which not only weighs little and has a wide and bright view but also is so shapely and casual that it may be used as a fashionable goods.

However, the problem with such a pair of rimless spectacles as mentioned above in which the recent tendency to less weight, wider view and better shapeliness does damage the durability, fastness and stability in holding the lenses thereof, with the result that there arises a contradictory proposition therebetween, as has been already pointed out in the specification titled "Spectacles Lenses Locking Mechanism" of the Japanese Utility Model Registration No. 3005441 which the present applicant has been granted by the Japanese Patent Office.

GB-A-2274728 discloses several embodiments of rimless spectacles. In one embodiment, each outer edge of each lens is supported by an end member having three prongs (elastic clamp members) of a fork extending from one end thereof. Two prongs abut the outer edge of the lens and the third prong extends through a hole in the lens.

The object of the present invention is intended to solve the aforesaid contradictory proposition arising in the conventional rimless spectacles as disclosed in "Spectacles Lenses Locking Mechanism" of the Japanese Utility Model Registration No. 3005441 by a different technical means and to provide a practical pair of rimless spectacles which can not only stably hold right-and-left lenses with holding parts capable of being manufactured basically in an integral molding but also be easy and fast to assemble practically without need to use any special skill.

Another object of the present invention is to provide a pair of rimless spectacles the lenses of which can be stably supported and elastically clipped at three positions, in other words, one locking hole and two edges of the lens without either cutting a slot on edges thereof or installing a receiving metallic piece to hold edges thereof on the lenses supporting portion of a bridge and a bracket endpiece.

The further object of the present invention is to provide a pair of rimless spectacles which is easy to assemble in view of correction process where assuming that there is something wrong with the making position of either the bridge locking hole or endpiece locking hole to be opened in the lenses, it can be assembled in an acceptable form without any difficulty only by a small adjustment of the distance between a portion of the bridge or bracket endpiece supporting the lens and a free end portion thereof.

According to the present invention, there is provided rimless spectacles comprising:-
a pair of lenses each having a bridge locking hole adjacent an inner edge of the lens and an endpiece locking hole adjacent an outer edge of the lens, said lenses being symmetrically disposed and connected together at their respective inner edges through a metallic bridge; and
two metallic bracket endpieces each mounted at a first end thereof to a respective one of the lenses at the outer edge thereof, and each connected at a second end thereof to a respective temple via a hinge so that each temple is foldably connected to the respective bracket endpiece, said first end of each bracket endpiece and each end of the bridge having a first bar portion, a second bar portion substantially parallel to the first bar portion, and a third bar portion, said bar portions being spaced by predetermined distances from each other, said first and second bar portions each extending in a forward direction of the spectacles and each forming a line contact with the respective outer and inner edges of the respective lens, and the third bar portion extending through the respective locking hole and being elastically secured thereto; the predetermined distances between the first and the third and the second and the third bar portions being selected such that each lens is elastically clamped and stably supported at three positions at each of its inner and outer edges, of which two of the three positions correspond to said line contacts and the third position corresponds to the respective locking hole;
characterised in that each second bar portion is connected at its first end to the respective first bar portion and at its second end to the respective third bar portion.

### BRIEF DESCRIPTION OF THE DRAWINGS

Fig. 1 is a perspective view to show an example (a pair of rimless spectacles with its lenses supported and clipped at three positions) embodied in and produced through the application of the present invention;
Fig. 2 is a partly enlarged and exploded perspective view to show the portions of the lens to which the bridge and the bracket endpiece are connected in the present embodiment;

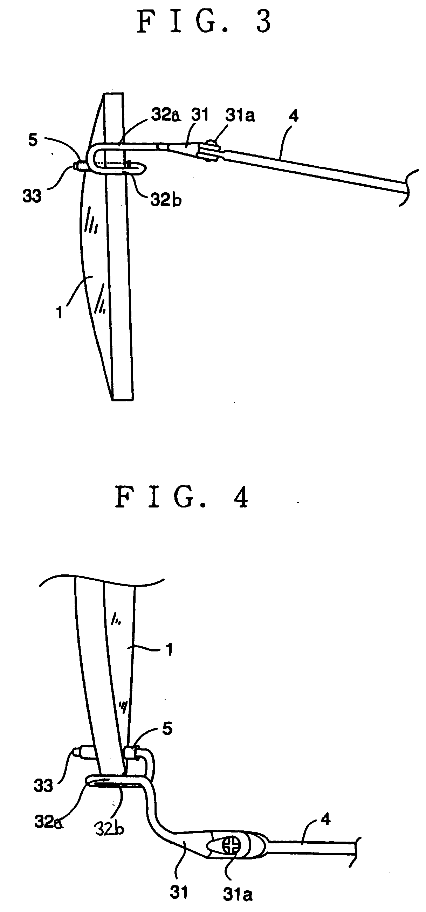

Fig. 3 is a side elevation to show the magnified portion of the lens to which the bracket endpiece is connected in the present embodiment; and
Fig. 4 is a plan view to show the magnified bracket endpiece in the present embodiment.

Hereinafter, the present invention will be described more in detail on the basis of the embodiment shown in the accompanying drawings.

Numeral (1) in the drawings indicates a pair of lenses symmetrically juxtaposed right and left and one bridge locking hole (11) is bored in said lenses nearer to the inner edge thereof where the bridge to be described later is locked while one endpiece locking hole (12) is bored in said lenses nearer to the outer edge thereof where the bracket endpiece to be described later is locked.

Numeral (2) therein indicates the bridge produced by performing plastic deformation (bending, pressing etc.) and heat treatment to metallic wire (made of nickel-chrome alloy in the present embodiment). The bridge (2) is integrally constituted by having at its both ends substantially parallel first and second bar portions (21a,21b) spaced by a predetermined distance, each first and second bar portion (21a,21b) being capable of making a line contact with the inner edge of a respective one of the above-mentioned lenses (1), and a third bar portion (22). The third bar portion (22) is connected to the second bar portion (21b) at an opposite end of the second bar portion (21b) to the connection between the second bar portion (21b) and the first bar portion (21a) and gives energization to the direction of the aforesaid first and second bar portions (21a,21b). This constitution provides mutually attracting elasticity and rigidity between said parallel first and second bar portions (21a,21b) and said third bar portion (22). And now, numeral (23) is a pad arm soldered on to the second bar portion (21b) of the bridge (2) and at the end portion of which a nose pad (of which numeral is omitted) is fixed.

Numeral (3) therein indicates bracket endpieces produced by swaging and further bending the same type of metallic wire as that of the aforesaid bridge (2). Each bracket endpiece (3) is integrally constituted and has at a first end thereof substantially parallel first and second bar portions (32a,32b) spaced at a predetermined distance, each capable of making a line contact with the outer edge of a respective one the aforesaid lenses (1), and a third bar portion (33) connected to the second bar portion (32b) at an opposite end thereof to the connection between the first and second bar portions (32a,32b) and giving energization to the direction of the aforesaid first and second bar portions (32a,32b) thereby providing mutually attracting elasticity and rigidity between the first and second bar portions (32a,32b) and said third bar portion (33). A second end (31) of the bracket endpiece (3) is arranged at the ocular side of the spectacles and a hinge (31a) connects the bracket endpiece (3) to a temple (4) to be described later.

Additionally, the second end (31) of the bracket endpiece (3) adopted in the present embodiment is of cranked form so that the distance between the temples (4) can be widened by parallel outward deformation of the second ends (31) of the bracket endpieces (3). Accordingly, the rimless spectacles in the present embodiment are suitable for those eyeglasses wearer whose right-and-left eyes is narrow in distance and whose face is broad in width.

The temple (4) is produced by using a super-elastic nickel-titanium alloy wire, and which is attached to the hinged bracket endpiece (3) by the hinge (31a). The free end portion of this temple (4) is overcoated with an ear pad (41) or what is called an end cover, made of synthetic resin.

Numeral (5) is a slip-off prevention buffer sleeve made of synthetic resin (polycarbonate resin) to be interposed between the bridge locking holes (11) of the aforesaid lenses (1) and the third bar portion (22) to be inserted through the bridge locking holes (11) as well as between the endpiece locking holes (12) of the aforesaid lenses (1) and third bar portion (33) to be inserted through the endpiece locking holes (12).

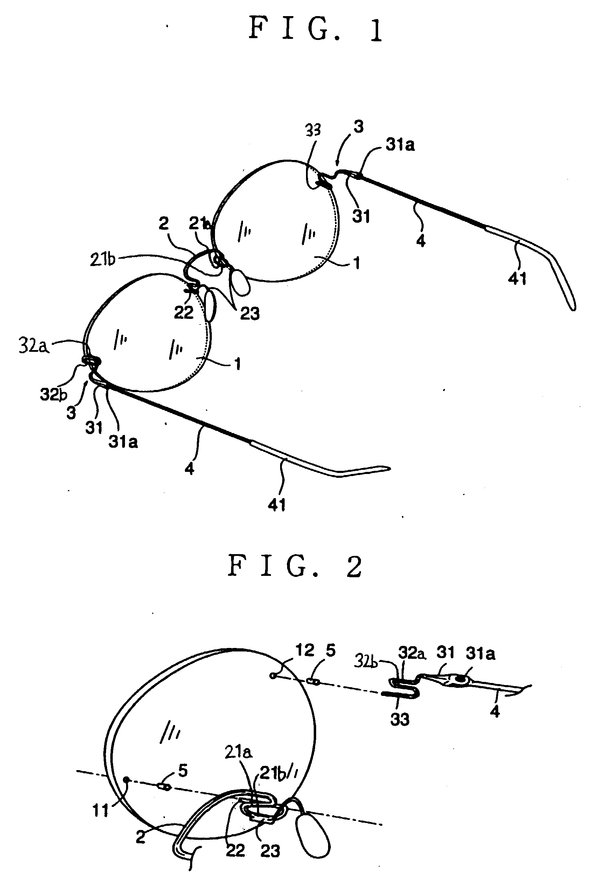

Then, with the rimless spectacles in the present embodiment, as shown in Figure 2, since it causes the first and second substantially parallel bar portions (21a,21b) and the third bar portion (22) of the bridge (2) to have moderate rigidity and mutually attracting elasticity therebetween by inserting the third bar portion (22) through the bridge locking holes (11) of the lenses (1) while linearly contacting the first and second bar portions (21a,21b) formed on the bridge (2) with the inner edge of the right-and-left lenses (1), the bridge locking hole (11) and the inner edge of the lenses (1) are stably interposed at three positions, namely, the first and second bar portions (21a,21b) and the third bar portion (22) of the bridge (2) so that the lenses (1) may be symmetrically juxtaposed at both ends of the bridge (2). In this case, if the third bar portion (22) is inserted through the bridge locking hole (11) of the lenses (1) with the buffer sleeve (5) fitted on the third bar portion (22) beforehand, it not only prevents the lenses (1) from becoming shaky but also keeps them stably positioned owing to slip-off prevention behaviour caused by the frictional resistance of said sleeve (5).

On the other hand, as shown in Figure 2, by inserting the third bar portion (33) of the bracket endpiece (3) through the endpiece locking hole (12) of the lenses (1) while linearly contacting the first and second bar portions (32a,32b) of the bracket endpiece (3) with the outer edge of the right-and-left lenses (1), because of mutually attracting elasticity between the first and second bar portions (32a,32b) and the third bar portion (33), the endpiece locking hole (12) and the outer edge of the lenses (1) are stably interposed at three positions, namely, the first and second bar portions (32a,32b) and the third bar portion (33) of the bracket endpiece (3) so that the right-and-left lenses (1), the bridge (2) and the bracket endpiece (3) form a structure and said bracket endpiece (3) may be correctly positioned at a predetermined place. Also, in this case, in the same way as mentioned above as to the third bar portion (22) of the bridge (2), if the third bar portion (33) of the bracket endpiece (3) is inserted through the endpiece locking hole (12) of the lenses (1) with the buffer sleeve (5) mounted on the third bar portion (33) beforehand, it not only prevents the lenses (1) from becoming shaky but also keeps them stably positioned owing to slip-off prevention behaviour caused by the frictional resistance of said sleeve (5).

A pair of rimless spectacles with its lenses supported and clipped at three positions in the present embodiment is completed by attaching the temples (4) to the bracket endpieces (3) via the hinges (31a) by mounting the nose pad at the free end of the pad arm (23).

While the preferred embodiment disclosed in this specification has been described above, it should be understood that the present invention is not limited to the above-mentioned example but can be modified in various ways within the scope of the accompanying patent claims. For instance, in the aforesaid example of the present invention, as lenses holding parts, the metallic wire is used which causes mutually attracting elasticity and moderate rigidity between the first and second bar portions (21a,21b) and the third bar portion (22) of the bridge (2) and between the first and second bar portions (32) and the third bar portion (33) of the bracket endpiece (3), but it is the correlation of the distance between the bridge locking hole (11) and the inner edge of the lens (1) with the distance between the first and second bar portions (21a,21b) o the one hand and the third bar portion (22) of the bridge (2) on the other, or that of the distance between the endpiece locking hole (12) and the outer edge of the lens (1) with the distance between the first and second bar portions (32a,32b) on the one hand and the third bar portion (33) on the other that most count. It does not matter only if it is a metallic material with naturally equipped elasticity and moderate rigidity, and it is especially good if annealing treatment is not administered to it.

### INDUSTRIAL APPLICABILITY

As having been described so far with the example of the preferred embodiment, since a pair of rimless spectacles embodied in the present invention adopts the lens interlocking method by means of three positions supporting system by making full use of the bridge locking hole and the endpiece locking hole respectively bored in the right-and-left lenses and skilfully harmonizing the elasticity and rigidity of the metallic material at the three bar portions of both the bridge and the bracket endpiece, it dynamically constitutes a very stable interlocked structure at the bridge and the bracket endpiece respectively interposing between one locking hole and the edge of the lens without either cutting a slot on the edge of the lens or installing a receiving metallic piece to hold the edge thereof on the lens supporting portion of the bridge and the bracket endpiece as in the case of the conventional rimless spectacles so that it can be provided with fastness and durability equivalent to the conventional rimless spectacles.

Also, a pair of rimless spectacles in the present invention uses lens holding parts manufactured in an integral molding so that it can be assembled in such a very simple way that the third bar portion of the holding parts are only poked through the locking holes of the lenses and the lenses are clipped by the other (first and second) bar portions thereof, in other words, it can be easily and quickly assembled without using any special skill or relying on an expert. In this case, if there is something wrong with the making position of the bridge locking hole or the endpiece locking hole to be opened in the lenses at the time of assembly process, correct assembly can be achieved without any difficulty because a triangle formed by supporting the lenses at those three positions can be transformed by rotating the third bar portion of the bridge and the bracket endpiece so as to adjust a little parallelwise the distance between the first and second bar portions and the third bar portion thereof.

Additionally, with a pair of the rimless spectacles in the present invention, since the right-and-left lenses can be placed in a correct position only by boring one bridge locking hole and one endpiece locking hole in each lens, it also makes it possible to freely design the lens according to the demand of the times without being bound by the lens holding mechanism.

Furthermore, with a pair of the rimless spectacles in the present invention, regarding the bracket endpiece to be arranged at the right-and-left sides of the spectacles, if necessary, by shaping the second end of the bracket endpiece in a cranked form and widening the distance between the temples by parallel outward deformation of the second ends of the bracket endpieces, it can well fit those eyeglasses wearers (like infants) whose right and left eyes are narrow in distance and whose face is relatively broad. Conventionally, since those eyeglasses wearers mentioned above have not been able to use a pair of rimless spectacles, they could not help choosing the spectacles of which frame is small in breadth. But in this case, the temple of which had to be forcedly transformed in order to coincide with the optic axis of the right-and-left lenses with the visual axis of the right-and-left eyes (distance between pupils).

In this way, according to the present invention, its practical and economic merits are extremely high because it can not only overcome the obstacles conventionally encountered in this type of rimless spectacles but also make the structure very simple and easy to assemble so that the cost of the parts may reduce.

## Claims

1. Rimless spectacles comprising:-
a pair of lenses (1) each having a bridge locking hole (11) adjacent an inner edge of the lens (1) and an endpiece locking hole (12) adjacent an outer edge of the lens (1), said lenses (1) being symmetrically disposed and connected together at their respective inner edges through a metallic bridge (2); and
two metallic bracket endpieces (3) each mounted at a first end thereof to a respective one of the lenses (1) at the outer edge thereof, and each connected at a second end (31) thereof to a respective temple (4) via a hinge (31a) so that each temple (4) is foldably connected to the respective bracket endpiece (3), said first end of each bracket endpiece (3) and each end of the bridge (2) having a first bar portion (32a,21a), a second bar portion (32b,21b) substantially parallel to the first bar portion (32a,21a), and a third bar portion (33,22), said bar portions (32,33;21,22) being spaced by predetermined distances from each other, said first and second bar portions (32a,32b,21a,21b) each extending in a forward direction of the spectacles and each forming a line contact with the respective outer and inner edges of the respective lens (1), and the third bar portion (33,22) extending through the respective locking hole (12,11) and being elastically secured thereto; the predetermined distances between the first and the third and the second and the third bar portions (32a,32b,33;21a,21b,22) being selected such that each lens (1) is elastically clamped and stably supported at three positions at each of its inner and outer edges, of which two of the three positions correspond to said line contacts and the third position corresponds to the respective locking hole (12,11);
characterised in that each second bar portion (32b,21b) is connected at its first end to the respective first bar portion (32a,21a) and at its second end (31) to the respective third bar portion (33,22).

2. Rimless spectacles in accordance with claim 1, characterised in that a synthetic resin sleeve is provided between each locking hole (11,12) and each third bar portion (22,33) of the bridge (2) and the bracket endpiece (3) respectively, said sleeve being adapted to prevent the respective third bar portion (22,33) from slipping out of its respective locking hole (11,12).

3. Rimless spectacles in accordance with claim 1 or claim 2, characterised in that the second end (31) of each bracket endpiece (3) is of cranked form so that the distance between the temples (4) can be widened by parallel outward deformation of the second ends (31).

## Patentansprüche

1. Randlose Brille, die folgende Komponenten aufweist;
ein Paar Gläser (1), die jeweils angrenzend an einen inneren Rand des Glases (1) ein Steghalteloch (11) und angrenzend an einen äußeren Rand des Glases (1) ein Krallenhalteloch (12) haben, wobei die Gläser (1) symmetrisch angeordnet und an ihren jeweiligen inneren Rändern durch einen Metallsteg (2) miteinander verbunden sind, und
zwei Krallenteile (3) aus Metall, die jeweils an einem ersten Ende an einem entsprechenden der Gläser (1) an deren äußeren Rand angebracht sind und die jedes an einem zweiten Ende (31) über ein Scharnier (31a) mit einem entsprechenden Bügel (4) verbunden sind, so daß jeder Bügel (4) klappbar mit dem jeweiligen Krallenteil (3) verbunden ist, wobei das erste Ende jedes Krallenteils (3) und jedes Ende des Steges (2) einen ersten Stababschnitt (32a, 21a), einen zweiten Stababschnitt (32b, 21b), der im wesentlichen parallel zum ersten Stababschnitt (32a, 21a) verläuft, und einen dritten Stababschnitt (33, 22) haben, wobei die Stababschnitte (32, 33; 21, 22) um einen im voraus bestimmten Abstand voneinander entfernt sind, wobei der erste und zweite Stababschnitt (32a, 32b, 21a, 21b) jeweils an der Brille nach vorn verlaufen und jeder einen linearen Kontakt mit den entsprechenden äußeren und inneren Rändern der entsprechenden Gläser (1) bildet, und wobei der dritte Stababschnitt (33, 22) durch das entsprechende Halteloch (12, 11) verläuft und elastisch an diesem befestigt ist; wobei der im voraus bestimmte Abstand zwischen dem ersten und dem dritten und zwischen dem zweiten und dem dritten Stababschnitt (32a, 32b, 33; 21a, 21b, 22) so gewählt wird, daß jedes Glas (1) an drei Punkten an jedem seiner inneren und äußeren Ränder elastisch festgeklemmt und stabil gehalten wird, wobei zwei der drei Punkte den linearen Kontakten entsprechen und der dritte Punkt dem jeweiligen Halteloch (12, 11) entspricht,
dadurch gekennzeichnet, daß jeder zweite Stababschnitt (32b, 21b) an seinem ersten Ende mit dem entsprechenden ersten Stababschnitt (32a, 21a) und an seinem zweiten Ende (31) mit dem entsprechenden dritten Stababschnitt (33, 22) verbunden ist.

2. Randlose Brille nach Anspruch 1, dadurch gekennzeichnet, daß zwischen jedem Halteloch (11, 12) und jedem dritten Stababschnitt (22, 33) des Steges (2) bzw. des Krallenteils (3) eine Kunstharzmuffe vorgesehen ist, wobei die Muffe zu verhindern in der Lage ist, daß der entsprechende dritte Stababschnitt (22, 33) aus dem entsprechenden Halteloch (11, 12) herausrutscht.

3. Randlose Brille nach Anspruch 1 oder Anspruch 2, dadurch gekennzeichnet, daß das zweite Ende (31) jedes Krallenteils (3) eine gekröpfte Form hat, so daß der Abstand zwischen den Bügeln (4) durch parallele Verformung der zweiten Enden (31) nach außen aufgeweitet werden kann.

## Revendications

1. Lunettes sans monture, comprenant:
une paire de verres (1) comportant chacun un trou de verrouillage du pont (11) adjacent à un bord interne du verre (1) et un trou de verrouillage de l'embout (12), adjacent à un bord externe du verre (1), lesdits verres (1) étant agencés symétriquement et connectés au niveau de leurs bords internes respectifs par l'intermédiaire d'un pont métallique (2); et
deux embouts de support métalliques (3), monté chacun au niveau d'une première extrémité correspondante sur un verre respectif (1) au niveau du bord externe correspondant, et connecté chacun au niveau d'une deuxième extrémité (31) à une branche respective (4) par l'intermédiaire d'une charnière (31a), chaque branche (3) étant ainsi connectée de façon à pouvoir plier à l'embout de support respectif (3), ladite première extrémité de chaque embout de support (3) et chaque extrémité du pont (2) comportant une première partie de barre (32a, 21a), une deuxième partie de barre (32b, 21b), pratiquement parallèle à la première partie de barre (32a, 21a), et une troisième partie de barre (33, 22), lesdites parties de barre (32, 33; 21, 22) étant espacées de distances prédéterminées, lesdites première et deuxième parties de barre (32a, 32b, 21a, 21b) s'étendant chacune dans une direction allant vers l'avant des lunettes et établissant chacune un contact linéaire avec les bords externes et internes respectifs du verre respectif (1), la troisième partie de barre (33, 22) s'étendant à travers le trou de verrouillage respectif (12, 11) et y étant fixée élastiquement; les distances prédéterminées entre les première et les troisième ainsi qu'entre les deuxième et les troisième parties de barre (32a, 32b, 33; 21a, 21b, 22) étant sélectionnées de sorte que chaque verre (1) est fixé élastiquement et supporté de manière stable au niveau de trois positions, au niveau de chacun de ses bords internes et externes, deux des trois positions correspondant auxdits contacts linéaires et la troisième position correspondant au trou de verrouillage respectif (12, 11);
caractérisées en ce que chaque deuxième partie de barre (32b, 21b) est connectée au niveau de sa première extrémité à la première partie de barre respective (32a, 21a) et au niveau de sa deuxième extrémité (31) à la troisième partie de barre respective (33, 22).

2. Lunettes sans monture selon la revendication 1, caractérisées en ce qu'un manchon en résine synthétique est agencé respectivement entre chaque trou de verrouillage (11, 12) et chaque troisième partie de barre (22, 33) du pont (2) et l'embout de support (3), ledit manchon étant destiné à empêcher le dégagement par glissement de la troisième partie de barre respective (22, 33) du trou de verrouillage respectif (11, 12).

3. Lunettes sans monture selon les revendications 1 ou 2, caractérisées en ce que la deuxième extrémité (31) de chaque embout de support (3) a une forme coudée, de sorte que la distance entre les branches (4) peut être agrandie par une déformation parallèle vers l'extérieur des deuxièmes extrémités (31).
